Europäisches Patentamt

(19) European Patent Office

Office européen des brevets

(11) Numéro de publication: **0 192 514**
**B1**

(12) **FASCICULE DE BREVET EUROPEEN**

(45) Date de publication du fascicule du brevet:
**03.05.89**

(51) Int. Cl.⁴: **C01G 25/04, C03C 3/32**

(21) Numéro de dépôt: **86400115.1**

(22) Date de dépôt: **21.01.86**

(54) Procédé de préparation de tétrafluorure de zirconium de haute pureté, utilisable pour la fabrication de verres fluorés.

(30) Priorité: **29.01.85 FR 8501202**

(43) Date de publication de la demande:
**27.08.86 Bulletin 86/35**

(45) Mention de la délivrance du brevet:
**03.05.89 Bulletin 89/18**

(84) Etats contractants désignés:
**DE GB**

(56) Documents cités:
**FR-A- 2 059 672**
**US-A- 2 639 218**

(73) Titulaire: **COMMISSARIAT A L'ENERGIE ATOMIQUE,
31/33, rue de la Fédération, F-75015 Paris(FR)**

(72) Inventeur: **Bridenne, Alaux Martine, 2, rue Lalande,
F-75014 Paris(FR)**
Inventeur: **Folcher, Gérard, 40, Allée de Persépolis,
F-91400 Orsay(FR)**
Inventeur: **Marquet-Ellis, Hubert, 64, Bld de la
République, F-78000 Versailles(FR)**

(74) Mandataire: **Mongrédien, André et al, c/o
BREVATOME 25, rue de Ponthieu, F-75008 Paris(FR)**

## Description

La présente invention a pour objet un procédé de préparation de tétrafluorure de zirconium de haute pureté, utilisable pour la fabrication de verres fluorés.

Les verres fluorés sont une nouvelle classe de matériaux présentant la caractéristique intéressante d'avoir une très bonne transparence dans le domaine de l'infrarouge moyen. De ce fait, ils peuvent trouver des applications intéressantes, en particulier sous la forme de fibres optiques pour la transmission de signaux ayant des longueurs d'ondes infrarouges allant de 2 à 4 µm. Pour ces applications, il est souhaitable que les pertes par absorption soient les plus faibles possibles, notamment si l'on veut transmettre les signaux à de longues distances, par exemple de l'ordre de 1000 km. Ceci ne peut être obtenu avec les meilleures fibres optiques réalisées actuellement, telles que les fibres de silice, car leurs pertes par absorption se situent à des valeurs avoisinant 0,2 dB/km qui sont très proches de la limite théorique du matériau, mais qui correspondent à une atténuation du signal d'environ 20% de son intensité au bout de 1 km.

Récemment, on a développé des matériaux à base de verre fluoré qui normalement présentent des pertes par absorption bien inférieures puisque les limites théoriques de tels matériaux se situent entre $10^{-2}$ et $10^{-3}$ dB/km. Ces verres fluorés sont des verres à forte proportion de tétrafluorure de zirconium (50 à 60% de $ZrF_4$) associé à des fluorures alcalins, alcalinoterreux et des fluorures de terres rares en proportions variables. Une composition typique de verre fluoré appartenant à cette famille est la suivante: 57,5% de $ZrF_4$, 33,8% de $BaF_2$ qui joue le rôle de fondant, et 8,7% de $ThF_4$ qui joue le rôle de stabilisant du réseau.

Les procédés connus de fabrication de fluorure de zirconium consistent à faire réagir un composé de zirconium tel que le tétrachlorure de zirconium avec un agent fluorant tel que l'acide fluorhydrique ou encore à faire réagir de l'oxyde de zirconium ou du chlorure de zirconyle avec de l'acide fluorhydrique, comme il est décrit dans le brevet américain US-A 2 639 218.

Cependant, jusqu'à présent, la réalisation de verres fluorés à partir de fluorure de zirconium n'a pas permis d'obtenir des pertes par absorption inférieures à 10 dB/km à une longueur d'onde de 2,4 µm. Une des raisons de ces pertes est dans la présence d'impuretés dans la masse vitreuse. Ces impuretés sont de deux ordres: des éléments de transition 3d ou 4f qui ont des bandes d'absorption dans le domaine de longueurs d'ondes de 2 à 4 µm, et des groupes hydroxyle OH qui absorbent à 3 µm avec une bande très large. Par des méthodes de spectroscopie, on a vérifié que les éléments Fe, Co, Ni et Cu avaient des bandes d'absorption vers 2 µm et que les éléments Ce, Pr, Nd, etc. ... présentaient des bandes d'absorption vers 3,5 µm. Aussi, pour obtenir des verres fluorés présentant une atténuation faible, il est nécessaire d'utiliser pour leur préparation des fluorures ultra-purs dans lesquels on a éliminé les groupes hydroxyle OH et les éléments qui absorbent dans le domaine de longueurs d'ondes de 2 µm à 3,5 µm.

Dans les verres fluorés, le constituant principal est le tétrafluorure de zirconium. Aussi, un procédé de préparation de tétrafluorure de zirconium qui permettrait d'obtenir un haut degré de pureté en ce qui concerne les teneurs en fer, cobalt, nickel, cuivre, cérium, praséodyme et néodyme, etc. serait d'un grand intérêt pour la fabrication de verres fluorés présentant une atténuation faible.

La présente invention a précisément pour objet un procédé de préparation de tétrafluorure de zirconium répondant aux caractéristiques précitées.

Le procédé de préparation de tétrafluorure de zirconium selon l'invention consiste à faire réagir un composé de zirconium avec un agent fluorant, et il se caractérise en ce que le composé de zirconium réponde aux formules:

$Zr(RBH_3)_4$ ou $R'_x(BH_4)_{4-x}Zr$

dans lesquelles R représente un atome d'hydrogène, un atome d'halogène, par exemple le chlore, un radical alkyle, un radical cycloalkyle, un radical cycloalcényle ou un radical aryle, R' représente un radical cycloalkcényle, par exemple le groupe cyclopentadiényle, et x est égale à 1, 2 ou 3.

Dans cette formule, les radicaux alkyle utilisés sont de préférence des radicaux alkyle, linéaires ou ramifiés, ayant de 1 à 10 atomes de carbone.

A titre d'exemple de tels radicaux, on peut citer les radicaux méthyle, éthyle, propyle, isopropyle, butyle.

Les radicaux cycloalkyle susceptibles d'être utilisés sont les radicaux cyclohexyle.

Les radicaux alcényle susceptibles d'être utilisés sont par exemple des radicaux comportant deux doubles liaisons, comme le radical cyclopentadiényle.

Les radicaux aryle susceptibles d'être utilisés sont par exemple le radical phényle, le radical naphtyle.

Généralement, on utilise comme composé de zirconium, le tétraborohydrure de zirconium de formule: $Zr(BH_4)_4$ qui est un composé covalent.

Toutefois, on peut utiliser d'autres composés du zirconium, par exemple $Zr(CH_3BH_3)_4$ ou $Zr(BH_4)_2Cp_2$ avec Cp représentant le groupe cyclopentadiényle.

Dans le procédé de l'invention, le fait de partir d'un composé de zirconium de formule $Zr(RBH_3)_4$ ou $R'_x(BH_4)_{4-x}Zr$ pour obtenir par fluoration de tétrafluorure de zirconium est très important car c'est grâce au choix d'un tel composé de départ que l'on peut obtenir le degré de pureté voulu en vue d'une utilisation du tétrafluorure de zirconium dans la fabrication de verres fluorés.

En effet, les composés de zirconium répondant aux formules précitées, tels que le borohydrure de zirconium peuvent être purifiés facilement des éléments divalents ou trivalents tels que le fer, le cobalt, le nickel, le cuivre, le cérium, le praséodyme et le néodyme, car ils présentent la propriété intéressante d'avoir des tensions de vapeur relativement élevées à la température ambiante et de rester stables dans un intervalle de températures allant de –196°C à 50°C.

En revanche, les borohydrures des éléments di- ou trivalents ne sont pas stables à la température ambiante et se décomposent en donnant du diborane et des hydrures métalliques non volatils ou des dérivés métal-bore également non volatils. Aussi, même en partant d'une source de zirconium souillée par des éléments 3d et 4f on peut obtenir du borohydrure de circonium de grande pureté car une simple étape de distillation permet de séparer le borohydrure de zirconium des borohydrures des éléments divalents ou trivalents qui étaient présents dans la source de zirconium. Si la source de départ est souillée par du hafnium, du thorium et/ou de l'uranium, ceux-ci ne peuvent être eliminés par distillation car leurs borohydrures sont également stables. Toutefois, pour une utilisation dans des verres fluorés, la présence d'hafnium et de thorium à l'état de traces n'est pas gênante car ils ne présentent pas de bandes d'absorption dans le domaine de longueurs d'ondes de 2 μm à 3,5 μm. En revanche, l'uranium pourrait être gênant, mais sa tension de vapeur est très inférieure à celle du borohydrure de zirconium et on peut ainsi l'éliminer par distillation sous vide à une température de 0°C.

Le composé de zirconium de formule $Zr(RBH_3)_4$ utilisé comme produit de départ dans le procédé de l'invention, peut être synthétisé par des méthodes classiques telles que celle décrite par H.R. Hoekstra et J.J. Katz dans J.AM. Chem. Soc. 71, 2488, (1949) ou celle décrite par W.E. Reid, J.M. Bish et A. Brenner dans J. Electrochem. Soc. 21, (1957).

De préférence, on prépare le composé de zirconium par réaction de $Li(BH_3R)$ sur du tétrachlorure de zirconium selon le schéma réactionnel suivant:
$$ZrCl_4 + 4\ Li(RBH_3) \rightarrow Zr(RBH_3)_4 + 4\ LiCl.$$

Le composé de zirconium de formule $Zr(BH_3CH_3)_4$ peut être synthétisé par des méthodes classiques telles que celles décrites par R. SHINOMOTO, E. GAMP, N.M. EDELSTEINS, D.H. TEMPLETON, A. ZALKIN, Inorg. Chem., 1983, 22, 2351.

Selon la réaction suivante:
$$ZrCl_4 + 4LiBH_3CH_3 \rightarrow Zr(BH_3CH_3)_4 + 4\ LiCl$$
la synthèse peut être dans l'éther, le THF ou le chlorobenzène; on décrit ci-après un exemple de préparation de ce composé. 0,29 g (8,1 mmol) de Li-$BH_3CH_3$ sont ajoutés à 0,47 g (2 mmol) de $ZrCl_4$ et 15 ml de chlorobenzène. Le mélange est agité pendant 48 h à 40°C sous argon et le produit est ramené à sec sous vide. $Zr(BH_3CH_3)_4$ est sublimé sous vide à 50° C pendant 12 h dans un piège à 0°C. On obtient 0,28 g (68%) de $Zr(BH_3CH_3)_4$, solide blanc dont le point de fusion est 90–92°C.

Synthèse de $LiBH_3CH_3$ selon la réaction suivante:
$$LiAlH_4 + (CH_3)_3B \rightarrow LiBH_3CH_3 + (CH_3)_2AlH$$
0,327 g (8,65 mmol) de $LiAlH_4$ sont introduits dans le réacteur sous forme d'une solution éthérée puis ramenés à sec. Ce mélange est mis en contact avec un excès de $B(CH_3)_3$ (547 cm³); la réaction s'effectue à température ambiante pendant 24 h. Le $(CH_3)_2AlH$ est séparé de $(CH_3)_3B$ en excès par piégeage à –78°C. Le solide final correspond à Li-$BH_3CH_3$ (0,31 g ; 8,72 mmol).

Les composés de zirconium de formule $R'_x(BH_4)_{4-x}Zr$ peuvent être préparés par des méthodes classiques telles que celles décrites par B.D. JAMES et B.E. SMITH dans SYN. REACT. INORG. METAL-ORG. CHEM, 4(5), p. 461–465 (1974).

Comme il s'agit de deux produits solides, une forte agitation en présence de billes solides doit être maintenue pendant la synthèse de $Zr(RBH_3)_4$ et l'on extrait le composé de zirconium $Zr(RBH_3)_4$ du milieu réactionnel par sublimation en réalisant un point froid. On purifie ensuite ce composé par distillation pour éliminer les impuretés indésirables, en particulier les éléments divalents et trivalents. Ceci peut être réalisé sous vide à une température de –50°C.

Le composé de zirconium ainsi purifié est ensuite fluoré en $ZrF_4$ par réaction avec un agent fluorant tel que le fluor, l'acide fluorhydrique, le monofluorure de chlore, le tétrafluorure de soufre et le difluorure de carbonyle $COF_2$. Dans le cas du borohydrure de zirconium, la réaction avec le fluor correspond au schéma suivant:
$$Zr(BH_4)_4 + 16F_2 \rightarrow ZrF_4 + 4BF_3 + 16HF$$

Cette réaction est très exothermique et conduit généralement à une explosion. L'exothermicité de la réaction décompose $Zr(BH_4)_4$ en $ZrB_2$, $B_2H_6$ et $H_2$. $ZrB_2$ est un solide noir réagissant difficilement avec les agents fluorants à la température ambiante, c'est donc un produit gênant pour l'utilisation de $ZrF_4$ pour la fabrication de fibres optiques. Aussi, la réaction ne peut être obtenue par simple mise en contact de l'agent fluorant avec le composé de zirconium, et il est important d'opérer dans des conditions douces de fluoration, à basse température et/ou en diluant l'agent fluorant par un gaz inerte, en particulier lorsque l'on utilise un agent fluorant fort comme le fluor.

Selon un premier mode de mise en œuvre du procédé de l'invention, l'agent fluorant est le fluor et l'on effectue la réaction de fluoration du composé de zirconium en régime dynamique dans un réacteur dans lequel on fait passer en continu du fluor dilué par un gaz inerte.

On peut aussi réaliser cette réaction du composé de zirconium avec le fluor dans un réacteur en régime statique, en utilisant du fluor dilué par un gaz inerte et une quantité de fluor telle qu'elle corresponde à un excès par rapport à la quantité de composé de zirconium.

Généralement, le taux de dilution du fluor est de 5 à 50%. Le gaz inerte peut être de l'azote, de l'argon ou de l'hélium.

Dans le premier mode de mise en œuvre du procédé de l'invention, on peut réaliser la réaction de fluoration en deux étapes effectuées à des températures différentes afin de cristalliser le tétrafluorure de zirconium.

Dans le cas où l'on opère en régime dynamique, la première étape peut être effectuée à une température inférieure ou égale à la température ambiante et la deuxième étape à une température supérieure, allant par exemple jusqu'à 300°C.

Dans ce cas on introduit généralement le composé de zirconium dans le réacteur, sous vide primaire, à une température de 77°K, puis on fait passer en continu dans ce réacteur du fluor dilué par un gaz inerte à une température de 0°C à 20°C, et on augmente ensuite la température du réacteur pour réaliser la deuxième étape de fluoration à une température supérieure allant jusqu'à 300°C.

Dans le cas où l'on opère en régime statique, on réalise généralement la première étape de fluoration à une température inférieure ou égale à la température ambiante, par exemple de –196°C à 20°C, et la deuxième étape à une température allant de la température ambiante à 300°C.

Dans ce cas, on peut introduire tout d'abord le composé de zirconium dans un réacteur sous vide primaire, maintenu à une température de 77°K, introduire ensuite dans le réacteur du fluor dilué par un gaz inerte en quantité telle qu'il soit en léger excès par rapport à la quantité stoechiométrique nécessaire pour convertir le composé de zirconium en tétrafluorure de zirconium et laisser la réaction se poursuivre pendant environ 1 heure. Après cette première étape de fluoration, on évacue les gaz réactionnels du réacteur puis on complète la réaction par une deuxième fluoration effectuée à une température allant de 100°C à 300°C avec du fluor non dilué.

Selon un deuxième mode de mise en œuvre du procédé de l'invention, on utilise un agent fluorant moins réactif tel que l'acide fluorhydrique, le monofluorure de chlore, le tétrafluorure de soufre ou le difluorure de carbonyle. Dans ce cas, il est préférable d'opérer à une température inférieure ou égale à la température ambiante pour éviter la formation de ZrB$_2$. Par ailleurs, il est avantageux de remonter la température progressivement à mesure que la réaction avance.

Comme précédemment, après avoir évacué les gaz réactionnels, on peut effectuer une deuxième étape de fluoration à une température supérieure, par exemple à la température ambiante.

Lorsque l'agent fluorant est de l'acide fluorhydrique anhydre, on peut effectuer la réaction de fluoration en régime dynamique ou en régime statique.

On peut aussi utiliser comme agent fluorant une solution aqueuse d'acide fluorhydrique. Dans ce cas, on met en contact le composé de zirconium avec la solution aqueuse d'acide fluorhydrique en faisant barboter un courant de gaz inerte contenant la vapeur dudit composé de zirconium dans la solution aqueuse d'acide fluorhydrique, on recueille ensuite le fluorure de zirconium hydraté ainsi obtenu et on le déshydrate par traitement thermique sous vide.

Selon un troisième mode de mise en œuvre du procédé de l'invention, on réalise la réaction en milieu gazeux en mettant en contact le composé de zirconium à l'état gazeux avec du fluor on un autre agent fluorant dilué par un gaz inerte. On peut, par exemple, mettre en œuvre cette réaction dans un réacteur de grand volume contenant le composé de zirconium sous une pression qui correspond à la pression de vapeur du composé de zirconium à la température du réacteur et introduire dans celui-ci, par un injecteur, le fluor dilué dans un gaz inerte, à une pression supérieure. Ceci produit du tétrafluorure de zirconium que l'on recueille sur les parois du réacteur.

On peut aussi réaliser cette réaction en continu en injectant dans le réacteur le fluor ou d'autres agents fluorants, HF en particulier, dilués par un gaz inerte et le composé de zirconium entraîné par un gaz inerte de manière à ce que les deux jets se croisent et que la réaction puisse se faire.

Dans tous les cas, on obtient du tétrafluorure de zirconium présentant des teneurs en métaux de transition bien inférieures à celles des produits de départ, ZrCl$_4$ et LiBH$_4$. Toutefois, pour améliorer encore le degré de pureté du tétrafluorure de zirconium produit, on effectue de préférence les réactions de fluoration dans des appareils en verre ou en plastique fluoré afin d'éviter toute contamination par des fluorures susceptibles de se former à partir des matériaux constituant le réacteur.

Enfin, pour éviter une hydratation du fluorure de zirconium obtenu par synthèse à basse température, on le soumet de préférence à une recristallisation par chauffage sous vide ou sous atmosphère fluorante.

D'autres caractéristiques et avantages de l'invention apparaîtront mieux à la lecture des exemples suivants donnés bien entendu à titre illustratif et non limitatif en référence au dessin annexé sur lequel:

– la figure 1 représente schématiquement une installation pour fluorer du borohydrure de zirconium au moyen d'acide fluorhydrique anhydre, et

– la figure 2 représente schématiquement une installation pour fluorer du borohydrure de zirconium pour une solution aqueuse d'acide fluorhydrique.

EXEMPLE 1: Préparation de borohydrure de zirconium Zr(BH$_4$)$_4$.

On fait réagir, sous atmosphère inerte, pendant 1 heure, 5 g de LiBH$_4$ et 12 g de tétrachlorure de zirconium ZrCl$_4$ dans un réacteur malaxeur réalisé en résine fluorée commercialisée sous la marque Kel-F® et comportant des billes en alumine.

On obtient ainsi du chlorure de lithium et du borohydrure de zirconium. On sépare le borohydrure de zirconium des produits réactionnels par sublimation, et on le purifie par deux distillations successives. On obtient ainsi du borohydrure de zirconium présentant les caractéristiques suivantes:

– température de fusion: 28,7°C,

– pression de vapeur du solide log P (en Pa): 13,36–2999,6 T$^{-1}$ (en mm der mercure: 10,919–2983 T$^{-1}$.

EXEMPLE 2: Préparation de ZrF$_4$ par fluoration dynamique de Zr(BH$_4$)$_4$ en régime dynamique.

On sublime dans un réacteur en Kel-F® (polymère fluoré) maintenu sous vide primaire à 77°K, 429 mg (2, 85 mmol) du Zr(BH$_4$)$_4$ obtenue dans l'exemple 1. On fait circuler ensuite en continu dans le réacteur, à la pression de 0,11 MPa, un mélange héliumfluor contenant 5% de fluor, à un débit de 1,3 l/h, à la température ambiante pendant 7 h et à 50°C pendant 10 h. On obtient ainsi une fluoration douce en ZrF$_4$ anhydre avec un rendement de 95%.

EXEMPLE 3: Préparation de ZrF$_4$ par fluoration de Zr(BH$_4$)$_4$ au moyen de fluor en régime statique.

On sublime dans un réacteur en Monel, sous vide primaire, à 77°K, 538 mg (3,6 mmol) du Zr(BH$_4$)$_4$ obtenu dans l'exemple 1. On introduit alors dans le réacteur du fluor dilué à 50% avec de l'azote en quantité correspondant à 80,7 mmol de fluor, soit à un léger excès de fluor, et on maintient les gaz en contact pendant une heure à la température de 77°K. On obtient ainsi une poudre contenant 95% de $ZrF_4$, 1% de $ZrB_2$ et 4% de bore sous forme de $B_2H_6$. On évacue alors les gaz réactionnels et on traite la poudre sous une pression de 0,1 MPa de fluor, à 200°C, pendant 16 heures, ce qui permet de fluorer $ZrB_2$.

On obtient ainsi du $ZrF_4\beta$ cristallisé avec un rendement de 90%.

EXEMPLE 4: Préparation de tétrafluorure de zirconium par fluoration de $Zr(BH_4)_4$ au moyen d'acide fluorhydrique anhydre.

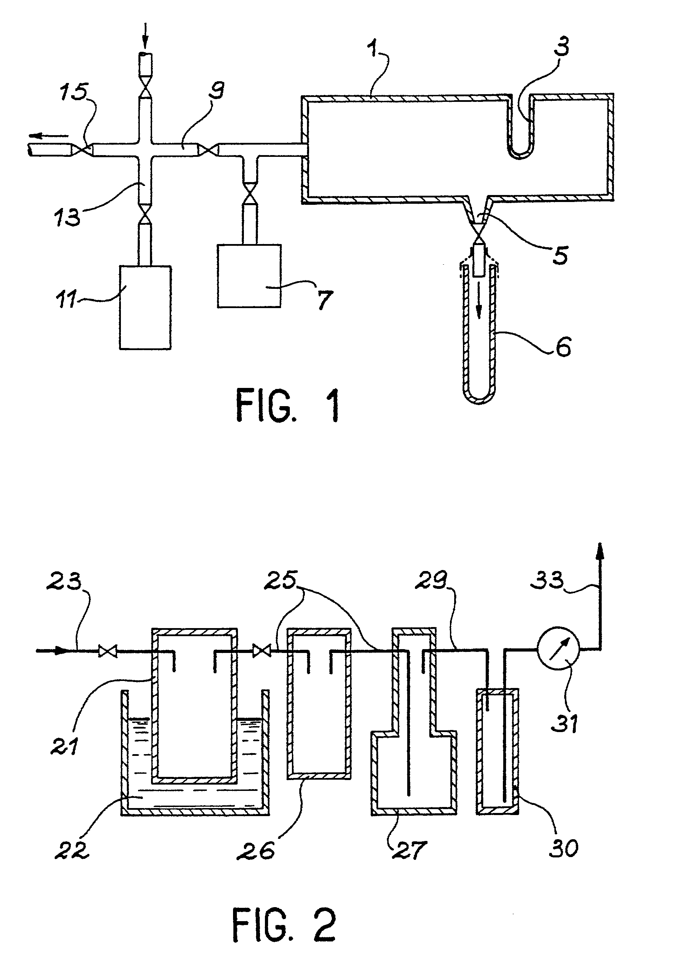

Dans ce cas, on utilise l'installation représentée sur la figure 1, qui comprend une enceinte de réaction 1 munie à sa partie supérieure d'un dispositif en doigt de gant 3 susceptible d'être refroidi par de la carboglace et comportant à sa partie inférieure une sortie 5 pour récupérer le produit obtenu dans le tube 6. Du borohydrure de zirconium présent dans un récipient 7 peut être introduit dans l'enceinte par une canalisation 9. De même, on peut introduire dans l'enceinte 1 de l'acide fluorhydrique anhydre présent dans le récipient 11 par l'intermédiaire des canalisations 13 et 9, la canalisation 9 pouvant être raccordée par ailleurs par une vanne 15 à des moyens pour faire le vide dans l'enceinte 1.

On dispose dans le récipient 650 mg du $Zr(BH_4)_4$ obtenu dans l'exemple 1. On fait le vide dans l'enceinte 1, puis on distille sous vide dans l'enceinte 1 le $Zr(BH_4)_4$ en refroidissant le doigt de gant 3 à −80°C par de la carboglace, ce qui permet de piéger le borohydrure de zirconium sur ce doigt de gant 3. On introduit alors de l'acide fluorhydrique anhydre à partir du récipient 11 de façon à admettre une pression de HF de 0,027 MPa dans un volume de 1 l. On enlève la carboglace et la réaction se poursuit lentement lors de la remontée de la température de -80°C à la température ambiante, ce qui prend environ 10 min. La réaction se manifeste par l'apparition d'une fumée blanche accompagnée d'un dépôt de poudre blanche sur les parois de l'enceinte 1. On remet alors de la carboglace et on évacue par pompage les gaz produits $(B_2H_6)$ et $(BF_3–H_2)$ formés lors de cette réaction. S'il reste du $Zr(BH_4)_4$ non transformé, piégé sur le doigt de gant 3, on réintroduit de l'acide fluorhydrique gazeux dans les mêmes conditions que précédemment. Lorsque tout le borohydrure de zirconium a été transformé en tétrafluorure de zirconium, on recueille le tétrafluorure de zirconium à l'abri de l'air par la sortie 5, dans le tube 6. On obtient ainsi un rendement de 80% en tétrafluorure de zirconium.

EXEMPLE 5: Préparation de tétrafluorure de zirconium par fluoration de $Zr(BH_4)_4$ au moyen d'acide fluorhydrique en solution aqueuse.

Dans ce cas, on utilise l'installation représentée sur la figure 2 qui comprend un générateur 21 de borohydrure de zirconium qui peut être chauffé par un bain 22. La vapeur de $Zr(BH_4)_4$ peut être entraînée par un gaz inerte entrant dans le générateur par la conduite 23 et sortant par la conduite 25, vers un réacteur 27 à tube plongeur après avoir traversé un flacon de garde 26. Le réacteur à tube plongeur 27 peut être rempli d'une solution d'acide fluorhydrique et les gaz peuvent être évacués du réacteur par des conduites 29 et 33 reliées à un débitmètre 31 par l'intermédiaire d'un récipient de garde 30.

On établit dans le réacteur 27 qui contient 20 cm³ d'une solution aqueuse d'acide fluorhydrique à 40%, un flux de vapeur de $Zr(BH_4)_4$ dans de l'argon, avec un débit de 0,3 l/min d'argon et une température du bain 22 entourant le générateur 21 de 20°C. Les gaz formés sont évacués en continu par la conduite 33. On sépare ensuite le tétrafluorure de zirconium produit dans le réacteur 27 en élevant la température à 60°C et en pompant l'acide fluorhydrique présent dans ce réacteur. On soumet ensuite le tétrafluorure de zirconium hydraté ainsi obtenu à une déshydratation par chauffage sous vide à 200°C.

EXEMPLE 6: Préparation de $ZrF_4$ par fluoration de $Zr(BH_4)_4$ au moyen d'acide fluorhydrique anhydre en régime dynamique.

On sublime dans un réacteur en Kel-F® (polymère fluoré) maintenu sous vide primaire à 77°K, 5 g (33 mmol) de $Zr(BH_4)_4$ obtenu dans l'exemple 1. On fait circuler ensuite en continu dans le réacteur à la pression de 0,11 MPa et à la température de 273°K, un mélange gazeux azote-acide fluorhydrique anhydre contenant 33% de HF à un débit de 1,5 l/h pendant 40 h. Le solide obtenu est mis sous pompage dynamique pendant 10 heures à 323°K. On obtient ainsi une fluoration douce du $Zr(BH_4)_4$ en $ZrF_4$ anhydre.

Dans tous ces exemples des analyses par spectroscopie d'absorption atomique ont montré que le tétrafluorure de zirconium obtenu a des teneurs en fer, en nickel et en cuivre inférieures à 100 ppm.

**Revendications**

1. Procédé de préparation de tétrafluorure de zirconium par réaction d'un agent fluorant avec un composé de zirconium, caractérisé en ce que le composé de zirconium répond aux formules:

$Zr(RBH_3)_4$ ou $R'_x(BH_4)_{4-x}Zr$

dans lesquelles R représente un atome d'hydrogène, un atome d'halogène, un radical alkyle, un radical cycloalkyle, un radical cycloalcényle ou un radical aryle, R' représente un radical cycloalcényle et x est égal à 1, 2 ou 3.

2. Procédé selon la revendication 1, caractérisé en ce que le composé de zirconium est le tétraborohydrure de zirconium de formule $Zr(BH_4)_4$.

3. Procédé selon la revendication 1, caractérisé en ce que le composé de zirconium est $Zr(CH_3BH_3)_4$.

4. Procédé selon l'une quelconque des revendications 1 à 3, caractérisé en ce que l'on purifie tout d'abord le composé de zirconium de formule $Zr(RBH_3)_4$ par distillation avant de le faire réagir avec l'agent fluorant.

5. Procédé selon l'une quelconque des revendications 1 à 4, caractérisé en ce que l'agent fluorant est choisi parmi le fluor, l'acide fluorhydrique, le monofluorure de chlore, le tétrafluorure de soufre et le difluorure de carbonyle $COF_2$.

6. Procédé selon l'une quelconque des revendications 1 à 4, caractérisé en ce que l'agent fluorant est du fluor et en ce que l'on effectue la réaction de fluoration du composé de zirconium en régime dynamique dans un réacteur dans lequel on fait passer en continu du fluor dilué par un gaz inerte.

7. Procédé selon l'une quelconque des revendications 1 à 4, caractérisé en ce que l'agent fluorant est le fluor et en ce que l'on fait réagir le composé de zirconium avec le fluor dans un réacteur en régime statique en utilisant du fluor dilué par un gaz inerte et une quantité de fluor telle qu'elle corresponde à un excès par rapport à la quantité de composé de zirconium.

8. Procédé selon l'une quelconque des revendications 6 et 7, caractérisé en ce que le gaz inerte est choisi parmi l'azote, l'hélium et l'argon.

9. Procédé selon l'une quelconque des revendications 6 et 8, caractérisé en ce que l'on réalise la fluoration en deux étapes, une première étape effectuée à une température inférieure ou égale à la température ambiante et une deuxième étape effectuée à une température supérieure.

10. Procédé selon l'une quelconque des revendications 7 et 8, caractérisé en ce que l'on réalise la fluoration en deux étapes, une première étape réalisée à une température inférieure ou égale à la température ambiante et une deuxième étape réalisée à une température allant de la température ambiante à 300°C.

11. Procédé selon l'une quelconque des revendications 1 à 4, caractérisé en ce que l'agent fluorant est de l'acide fluorhydrique anhydre et en ce que l'on effectue la réaction de fluoration, en régime statique ou en régime dynamique.

12. Procédé selon l'une quelconque des revendications 1 à 4, caractérisé en ce que l'agent fluorant est une solution aqueuse d'acide fluorhydrique et en ce que l'on met en contact le composé de zirconium avec la solution aqueuse d'acide fluorhydrique en faisant barboter un courant de gaz inerte contenant la vapeur dudit composé de zirconium dans la solution aqueuse d'acide fluorhydrique, en ce que l'on recueille le fluorure de zirconium hydraté ainsi obtenu et en ce que l'on déshydrate ledit fluorure de zirconium par traitement thermique sous vide.

**Patentansprüche**

1. Verfahren zur Herstellung von Zirkoniumtetrafluorid durch Umsetzung eines Fluorierungsmittels mit einer Zirkoniumverbindung, dadurch gekennzeichnet, daß die Zirkoniumverbindung den Formeln entspricht:
$Zr(RBH_3)_4$ oder $R'_x(BH_4)_{4-x}Zr$
worin bedeuten:
R ein Wasserstoffatom, ein Halogenatom, einen Alkylrest, eine Cycloalkylrest, einen Cycloalkenylrest oder einen Arylrest,
R' einen Cycloalkenylrest und x die Zahl 1, 2 oder 3.

2. Verfahren nach Anspruch 1, dadurch gekennzeichnet, daß es ich bei der Zirkoniumverbindung um das Zirkoniumtetraborhydrid der Formel $Zr(BH_4)_4$ handelt.

3. Verfahren nach Anspruch 1, dadurch gekennzeichnet, daß es sich bei der Zirkoniumverbindung um $Zr(CH_3BH_3)_4$ handelt.

4. Verfahren nach einem der Ansprüche 1 bis 3, dadurch gekennzeichnet, daß die Zirkoniumverbindung der Formel $Zr(RBH_3)_4$ zuerst durch Destillation gereinigt wird, bevor sie mit dem Fluorierungsmittel umgesetzt wird.

5. Verfahren nach einem der Ansprüche 1 bis 4, dadurch gekennzeichnet, daß das Fluorierungsmittel ausgewählt wird aus der Gruppe Fluor, Fluorwasserrstoffsäure, Chlormonofluorid, Schwefeltetrafluorid und Carbonyldifluorid $COF_2$.

6. Verfahren nach einem der Ansprüche 1 bis 4, dadurch gekennzeichnet, daß es sich bei dem Fluorierungsmittel um Fluor handelt und daß die Reaktion zur Fluorierung der Zirkoniumverbindung in einem dynamischen Zustand in einem Reaktionsgefäß durchgeführt wird, in das man mit einem Inertgas verdünntes Fluor kontinuierlich einleitet.

7. Verfahren nach einem der Ansprüche 1 bis 4, dadurch gekennzeichnet, daß es sich bei dem Fluorierungsmittel um Fluor handelt und daß man die Zirkoniumverbindung mit dem Fluor in einem Reaktionsgefäß in einem statischen Zustand reagieren läßt, indem man mit einem Inertgas verdünntes Fluor in einer Menge verwendet, die einem Überschuß gegenüber der Menge der Zirkoniumverbindung entspricht.

8. Verfahren nach einem der Ansprüche 6 und 7, dadurch gekennzeichnet, daß man das Inertgas aus der Gruppe Stickstoff, Helium und Argon auswählt.

9. Verfahren nach einem der Ansprüche 6 und 8, dadurch gekennzeichnet, daß man die Fluorierung in zwei Stufen durchführt, wobei man die erste Stufe bei der Umgebungstemperatur oder einer darunterliegenden Temperatur und die zweite Stufe bei einer darüberliegenden Temperatur durchführt.

10. Verfahren nach einem der Ansprüche 7 und 8, dadurch gekennzeichnet, daß man die Fluorierung in zwei Stufen durchführt, wobei man die erste Stufe bei Umgebungstemperatur oder einer darunterliegenden Temperatur und die zweite Stufe bei einer Temperatur, die von Umgebungstemperatur bis 300°C geht, durchführt.

11. Verfahren nach einem der Ansprüche 1 bis 4, dadurch gekennzeichnet, daß man als Fluorierungsmittel wasserfreie Fluorwasserstoffsäure verwendet und daß man die Fluorierung in einem statischen Zustand oder in einem dynamischen Zustand durchführt.

12. Verfahren nach einem der Ansprüche 1 bis 4, dadurch gekennzeichnet, daß man als Fluorierungsmittel eine wäßrige Lösung von Fluorwasserstoffsäure verwendet und daß man die Zirkoniumverbindung mit der wäßrigen Fluorwasserstoffsäurelösung in Kontakt bringt, indem man einen Strom eines Inertgases, das den Dampf der Zirkoniumverbindung enthält, in eine wäßrige Fluorwasserstofflösung einperlen läßt, und daß man das dabei erhaltene hydratisierte Zirkoniumfluorid zurückgewinnt und das Zirkoniumfluorid durch thermische Behandlung unter Vakuum dehydratisiert.

## Claims

1. Process for the preparation of zirconium tetrafluoride by reacting a fluorinating agent with a zirconium compound, characterized in that the zirconium compound complies with the formulae:

$$Zr(RBH_3)_4 \text{ or } R'_x(BH_4)_{4-x}Zr$$

where R denotes a hydrogen atom, a halogen atom, an alkyl radical, a cycloalkyl radical, a cycloalkenyl radical or an aryl radical, R' denotes a cycloalkenyl radical and x is equal to 1, 2 or 3.

2. Process according to claim 1, characterized in that the zirconium compound is zirconium tetraborohydride of formula $Zr(BH_4)_4$.

3. Process according to claim 1, characterized in that the zirconium compound is $Zr(CH_3BH_3)_4$.

4. Process according to any one of the claims 1 to 3, characterized in that first of all the zirconium compound of formula $Zr(RBH_3)_4$ is purified by distillation before reacting it with the fluorinating agent.

5. Process according to any one of the claims 1 to 4, characterized in that the fluorinating agent is selected from fluorine, hydrofluoric acid, chlorine monofluoride, sulphur tetrafluoride and carbonyl difluoride $COF_2$.

6. Process according to any one of the claims 1 to 4, characterized in that the fluorinating agent is fluorine, and the fluorination reaction of the zirconium compound is performed in dynamic conditions in a reactor through which fluorine diluted by an inert gas is continuously passed.

7. Process according to any one of the claims 1 to 4, characterized in that the fluorinating agent is fluorine, and the zirconium compound is reacted with the fluorine in a reactor in static conditions, using fluorine diluted by an inert gas, and a quantity of fluorine such that it corresponds to an excess in relation to the quantity of zirconium compound.

8. Process according to one of the claims 6 and 7, characterized in that the inert gas is selected from nitrogen, helium and argon.

9. Process according to either of the claims 6 and 8, characterized in that the fluorination is performed in two stages, a frirst stage performed at a temperature lower than or equal to ambient temperature, and a second stage performed at a higher temperature.

10. Process according to either of the claims 7 and 8, characterized in that the fluorination is performed in two stages, a first stage performed at a temperature lower than or equal to the ambient temperature, and a second stage performed at a temperature ranging from ambient temperature to 300°C.

11. Process according to any one of the claims 1 to 4, characterized in that the fluorinating agent is anhydrous hydrofluoric acid, and the fluorination reaction is performed in static or dynamic conditions.

12. Process according to any one of the claims 1 to 4, characterized in that the fluorinating agent is an aqueous solution of hydrofluoric acid, and the zirconium compound is contacted with the aqueous solution of hydrofluoric acid by bubbling a flow of inert gas containing the vapour of such zirconium compound in the aqueous soution of hydrofluoric acid, the resulting hydrated zirconium fluoride being collected and such zirconium fluoride being dehydrated by thermal treatment in vacuo.

FIG. 1

FIG. 2